# EUROPEAN PATENT APPLICATION

(11) **EP 1 849 387 A2**
(43) Date of publication of application: **31.10.2007**
(21) Application number: 07006480.3
(22) Date of filing: 29.03.2007
(51) Int. Cl.: A47J 36/24, A47J 39/00, A47G 23/06

(54) **Heating aid**

(30) Priority: 29.03.2006 NL 1031459
(71) Applicant: Vital Link B.V., 4762 AM Zevenbergen (NL)
(72) Inventor: Van Zutphen, Theodorus Petrus Johannes, 5462 GK Veghel (NL); Reek, Robert Jan Julius, 4762 AM Zevenbergen (NL)
(74) Representative: Jilderda, Anne Ayolt

(57) **Abstract**

A heating aid for meals comprises a box-like container with a base (11) which is provided with at least one inductive capturing element (17) which is susceptible to entering into inductive contact with an induction field of an induction apparatus. The container comprises a closed bottom space (16) between an inner cover (13) and the base (11), which bottom space is at least almost completely filled with a medium. The capturing element (17) is accommodated in the bottom space (16) and is at least substantially wholly surrounded by the medium. The medium provides for heat-exchanging contact between the capturing element (17) and the inner cover (13).

## Description

The present invention relates to a heating aid for meals, comprising a box-like container with a base which is provided with at least one inductive capturing element which is susceptible to entering into inductive contact with an induction field of an induction apparatus.

Such a device finds particular application in regenerating hot meals which have been prepared earlier but have meanwhile cooled. These may for instance be so-called ready-meals which are purchased from a caterer or supermarket, but in particular also meals for the purpose of home care of elderly and disabled persons. In the first case the meal will usually be transferred into the heating aid with or without the original packaging, while in the case of home care the heating aid can also be utilized not only as packaging but also as an optionally re-usable transporting medium. In the case of such a home care meal a number of courses of a full meal are usually prepared in a central (large-scale) kitchen and served out into separate items of crockery in the heating aid.

A heating aid of the type described in the preamble is known from German patent application DE 195 07 083 and comprises a box-like container with a fitting lid. Accommodated at the bottom of the base is an inductive capturing element in the form of a metal layer on which a meal can be received for the purpose of heating. The heating aid is brought for this purpose within an induction zone of an induction coil of an induction apparatus. During operation the induction coil is surrounded by a dynamic electromagnetic field which is captured within the induction zone by the capturing element. Induction currents are hereby induced in the capturing element which in turn result in an increase in the temperature thereof. This heat is partly relinquished to the meal, which is thus also heated. In order to prevent condensation of water vapour from the meal on the lid, the lid is provided on an inner side with an inducible metal layer, plate, grid or foil, so that this is also heated during the heating process.

Although the known heating aid per se results in the desired heating of a meal arranged therein, it nevertheless has a practical drawback. The capturing element of the base captures the induction field over its whole surface during operation, and will therefore also be heated over its whole surface. However, the element can substantially only relinquish this heat to the meal where the meal is in contact with the capturing element. There is otherwise a danger of overheating of the element. The known container is therefore particularly unsuitable for heating home care meals, wherein a meal must be heated in one or more items of crockery, such as a plate or a bowl, and hereby only covers a limited part of the surface of the capturing element.

The present invention has for its object to provide a heating aid of the type stated in the preamble which obviates this and which is particularly suitable for heating a meal received in an item of crockery.

In order to achieve the intended object a heating aid of the type stated in the preamble has the feature according to the present invention that the container comprises at least one closed bottom space between an inner cover and the base, which bottom space is at least almost completely filled with a medium, that the at least one capturing element is accommodated in the bottom space and is at least substantially wholly surrounded by the medium, and that the medium is suitable and able to enter into heat-exchanging contact between the capturing element and the inner cover. The capturing element is thus fully embedded in a heat-exchanging medium, whereby the capturing element can relinquish its heat over its entire surface. Local overheating is thus avoided. The medium will in turn distribute and relinquish the heat to the meal via the inner cover, which meal is thus heated uniformly irrespective of whether it has been poured separately into the container or has been served out in a more pleasant and appetising way into an item of crockery such as a plate, cup or dish.

In a preferred embodiment a heating aid according to the invention has the feature that the medium comprises a fluid, in particular a semi-fluid medium such as a paste or a gel and, in a more particular embodiment, that the semi-fluid medium comprises a gel.

Such a fluid or semi-fluid medium has the advantage that the bottom space can be filled therewith afterward, while it wholly encloses the capturing element so as to ensure an optimal heat transfer. Furthermore, an item of crockery with a meal therein can in some cases sink into the fluid medium, which herein adapts itself to the form of the item of crockery so as to also bring about an optimal heat exchange on this side.

In a further particular embodiment a heating aid according to the invention has the feature that the capturing element comprises a metal plate which is arranged parallel to the base at a certain height in the bottom space, and in another further embodiment that the metal plate comprises a ferromagnetic metal. In addition to enabling practical mounting in the container base, such a metal plate has also been found in practice to result in an excellent capture of induction power. Because the plate is herein arranged at a certain height in the bottom space, the medium can be arranged all around it so that the capturing element can relinquish on all sides the induction heat generated therein.

In order to regulate and control a maximum induction power that can be captured, a further particular embodiment of the heating aid according to the invention has the feature that one or more of a form, position, material, number and dimensions of the at least one capturing element is adapted to a maximum induction power that can be captured thereby at a determined power output of the induction apparatus. Overheating as a result of inadmissibly large induction currents can thus be avoided during use with normal, commercially available induction apparatuses which do not exceed a certain power output. This creates greater safety in the use of the heating aid. A further particular embodiment of the heating aid has the feature that the bottom space is provided with a pressure-relief valve, and thus adds an additional safety provision which is particularly intended when a semi-fluid or fluid medium is applied in the bottom space.

The heating aid according to the invention is suitable both for use in a home care environment, wherein use is made of more or less standard crockery in which a meal is served, and for instance in a normal home situation where personal crockery will generally be used or heating takes place in an original package of a ready-meal prepared elsewhere. With a view to home care and related applications, a further preferred embodiment of the heating aid according to the invention has the feature that the inner cover comprises a pre-formed plate with at least one recess for receiving therein an item of crockery with a meal in at least practically fitting manner. The recessed position results in an improved heat exchange with the medium.

The pre-formed inner cover moreover provides fixed positions for placing of one or more items of crockery, which are thus heated at a fixed position and also remain in place during transport. Advantage can be gained here by a specific placing and dimensioning of various capturing elements in the bottom space. In a further preferred embodiment the heating aid according to the invention is therefore characterized in that the inner cover comprises separate recesses for receiving therein separate items of crockery with a meal, and that there is provided per recess at least one capturing element, of which a form, position, material, number and dimensions are adapted to a maximum induction power that can be captured thereby at a determined power output of the induction apparatus subject to the item of crockery and meal in the associated recess. Different heating paths and/or final temperatures can thus be realized in respect of the different recessed locations in the inner cover adapted to the meal for receiving therein.

For an application wherein the crockery varies but such an improved heat exchange is nevertheless desired, a further preferred embodiment of the heating aid according to the invention has the feature that the medium comprises a fluid, in particular a semi-fluid medium such as a paste or a gel, and that the inner cover comprises a flexible layer. In this case the flexible inner cover can adjust itself more or less freely to the form and size of an item of crockery such as a plate, bowl or a cup, which can be pressed into the fluid medium at a more or less random position.

A further particular embodiment of the heating aid according to the invention has the feature that the bottom space leaves a bottom part free. The bottom part, which is thus free of the medium, will not be heated, or at least to a significantly lesser extent, and thereby forms a cold zone in the device for receiving a part of the meal therein which requires no heating, or hardly any, such as for instance a dessert, salad of fruit. The whole meal can thus still be served out into the heating aid and no further account need be taken of this.

In order to prevent loss of energy and to limit an increase in the temperature of an outer casing of the container, a further particular embodiment of the heating aid according to the invention has the feature that a thermally insulating layer is arranged between the capturing element and the outer casing of the container. The insulating layer herein separates the heated medium from the outer casing, which will thus relinquish its heat mainly to the inner cover.

In order to retain as much food moisture as possible during the heating and in addition also be able to utilize the heating aid as transport means, a further preferred embodiment thereof according to the invention has the feature that an upright wall extends from the base and that the container is provided with a lid which lies all around against an upper edge of the wall. In order to prevent condensation on the inside of the lid surface, which could otherwise adversely affect the quality of the meal, a further preferred embodiment of the heating aid herein has the feature that the lid is double-walled and filled with an insulating foam.

Diverse materials which transmit induction waves are per se suitable for the heating aid according to the invention. Nevertheless, a preferred embodiment thereof has the feature that at least an outer casing and the inner cover of the container are manufactured at least substantially wholly from plastic. Use is preferably made here of a strong and robust plastic which readily allows of injection-moulding or other industrially processing, such as for instance ABS of polystyrene, so that a durable device can be produced in relatively simple and inexpensive manner in only one or a few parts. The same applies for a possible lid, which is preferably also manufactured at least substantially wholly from a plastic.

The invention will now be further elucidated on the basis of several exemplary embodiments and an accompanying drawing. In the drawing:
- figures 1A-B: show a first exemplary embodiment of a heating aid according to the invention, in respectively an empty and a filled state;
- figures 2A-B: show a second exemplary embodiment of a heating aid according to the invention, in respectively an empty and a filled state;
- figure 3A: shows a third exemplary embodiment of a heating aid according to the invention in a plane cross-section; and
- figures 3B-C: show the heating aid of figure 3A in a cross-section along respectively line I-I and line II-II in figure 3A.

The figures are otherwise purely schematic and not drawn to scale. For the sake of clarity some parts in particular may be exaggerated to a greater or lesser extent. Corresponding parts are designated as far as possible in the figures with the same reference numeral.

The heating aid of figure 1A-B comprises a box-like container with the base 11, from which an upright wall 12 extends all round. The device serves for combination with an induction apparatus (not further shown) such as a hot plate or trolley, and is herein brought within an induction field of an induction coil of the apparatus. The shown heating aid can for instance be placed with the base on a cooking zone of an induction hot plate. For base 11 and wall 12 of the container use is preferably made of an impact-resistant, relatively heat-resistant plastic such as ABS or polystyrene, although other materials are also suitable provided they are permeable to electromagnetism.

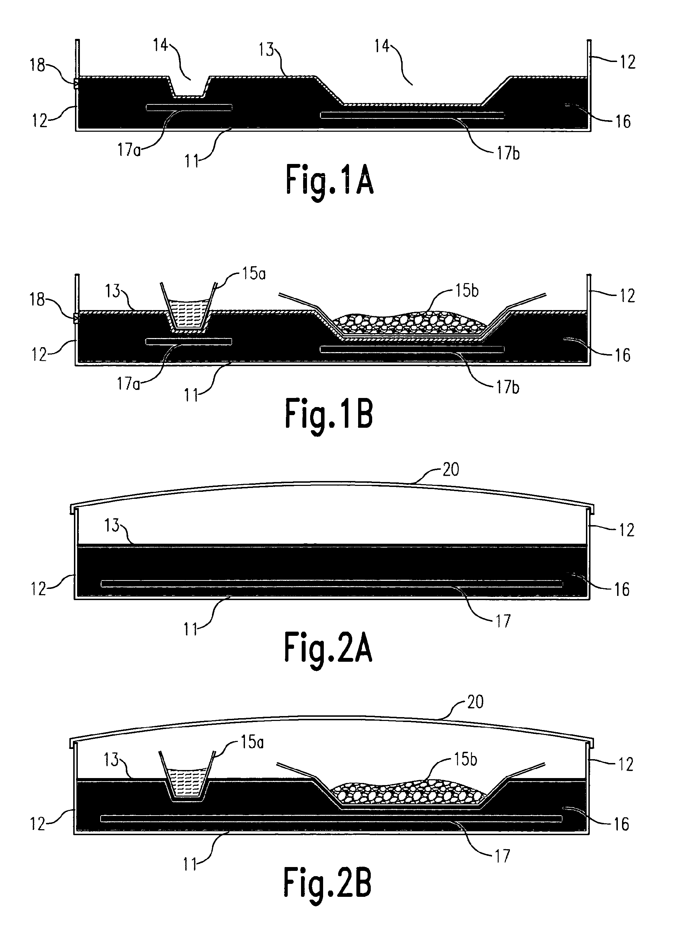

The device comprises an inner cover 13 in the form of a pre-formed plate likewise manufactured from ABS or polystyrene, although other materials, which may or may not be permeable to electromagnetism, can also be used for the inner cover. The inner cover comprises two pre-formed recesses 14, the form and dimensions of which are adapted to the sizes of respective items of crockery such as a cup 15a and a plate 15b, which are received in practically fitting manner therein, see figure 1B, and are filled with a course of a meal.

Situated between inner cover 13 and base 11 of the container is a bottom space 16 which is completely filled with a heat-transferring medium. Use is preferably made here of a fluid or semi-fluid fluid, such as particularly the gel which is applied in this example and which can be injected in simple manner into bottom space 16 during production. In addition, the bottom space comprises two inductive capturing elements in the form of two metal plates 17a,17b of iron or another ferromagnetic metal, which are each arranged under a recess 14 and are susceptible to entering into inductive contact with an induction field of the induction apparatus. Capturing elements 17a,17b are herein mounted at some height in the bottom space by means of mounting means (not further shown) and are thus wholly surrounded by the medium in the bottom space.

In order to regenerate the meals arranged in the items of crockery the heating aid is placed on the induction apparatus so that induction fields are captured by capturing elements 17a,17b. The induction currents induced in the capturing elements as a result thereof bring about an increase in the temperature of the capturing elements, which relinquish their heat to the surrounding medium in the bottom space. The medium is hereby heated and in turn relinquishes the heat to the meals on the inner cover which will thus be heated uniformly. Situated for increased safety in the wall of the container is a pressure-relief valve 18 which opens in the unlikely event of an inadmissible increase in the pressure of the medium.

A second exemplary embodiment of a heating aid according to the invention is shown in figures 2A and 2B in respectively an empty and filled state. As that of the foregoing embodiment, the device of this embodiment comprises a box-like container 10 with a base and a side wall 12 extending therefrom. Instead of a form-retaining, pre-formed upper cover, the device of this embodiment comprises a flat, flexible elastic upper cover 13 which is able to adjust itself to the form of an item of crockery placed therein, as shown in figure 2B. The upper cover comprises for this purpose a plastic foil or a rubber foil, optionally of natural rubber, with a thickness in the order of one or several millimetres. In order to retain as much food moisture as possible during the regeneration process, and from a hygiene viewpoint, the container is moreover provided in this embodiment with a sealing lid 20 which connects to an upper edge of wall 12.

A bottom space 16 between inner cover 13 and base 11 is in this embodiment also wholly filled with a heat-transferring fluid medium such as a paste or a gel. An inductive capturing element 17 fully embedded in the medium is placed in the bottom space. Owing to the flexible inner cover 13 in combination with the fluid or semi-fluid medium in bottom space 16, the inner cover is able to adjust and shape itself to any random item of crockery 15a,15b, see figure 2B, which can moreover be placed at any random position. In this embodiment capturing element 17 also comprises a metal plate and extends over practically an entire bottom surface so as to result in a desired overall heating of a meal as soon as the device is brought within an induction field of an induction apparatus (not further shown).

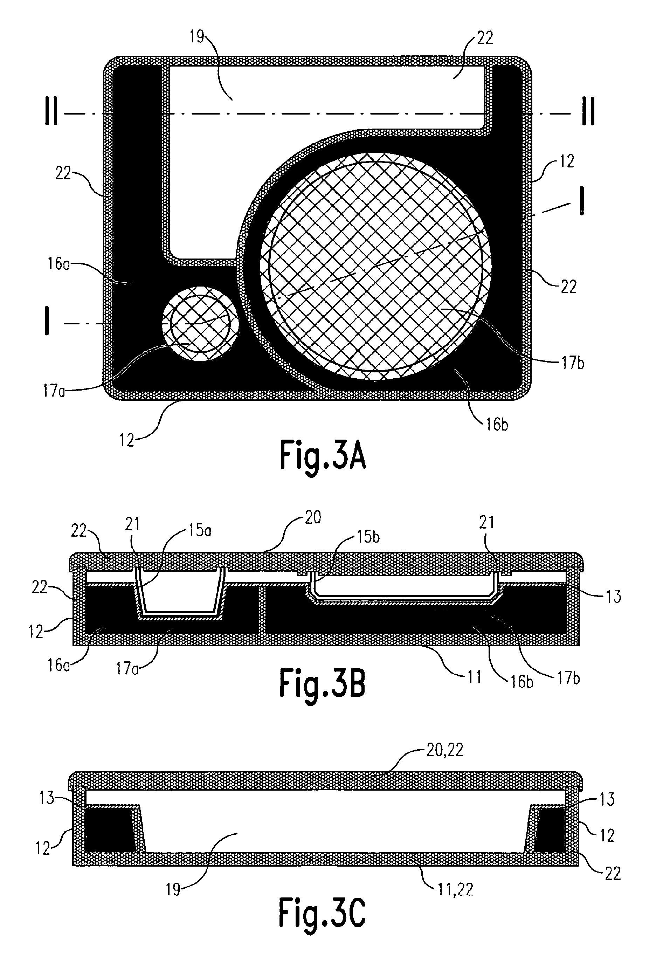

A third exemplary embodiment of a heating aid according to the invention is shown in figures 3A-C. In this embodiment the device also comprises a box-like container 11,12 with a lid 20. Other than in the foregoing embodiments, use is made in this embodiment of a double-walled base, wall and lid which are filled with an insulating foam 22. The insulating foam forms a thermally insulating layer on all sides which, in addition to enhancing the efficiency, also enhances the ergonomics of the device by limiting an increase in the temperature of an outer casing 11,12 of the container to a minimum.

In this embodiment the device also comprises an inner cover 13 in the form of a pre-formed, form-retaining plastic plate in which recesses are formed locally for the purpose of receiving a predetermined item of crockery 15a,15b, which can be filled with a meal for heating. In this exemplary embodiment various bottom spaces 16a,16b are enclosed between inner cover 13 and base 11, each space being for the purpose of a separate item of crockery 15a,15b. Bottom spaces 16a,16b are both filled with a heat-transferring medium such as a paste or a gel, and are each provided with a capturing element 17a,17b at the position of the recesses, which are wholly surrounded by the medium. The two bottom parts are mutually separated by an optionally insulated partition wall so that each can take on its own temperature, adjusted to the meal for heating therein.

The shape, position, material, number and dimensions of capturing elements 17a,17b are specifically adapted to a maximum induction power that can be captured thereby at a determined power output of the induction apparatus subject to the item of crockery and meal received in the associated recess. Different heating paths and/or final temperatures can thus be realized per meal in a heating step which is nevertheless uniform.

At the position of the items of crockery the lid 20 comprises internally a sealing edge 21 for connection all round to an upper edge of the items of crockery 15a,15b, see figure 3B. Not only does this enhance the regeneration process of the meal arranged in the associated item of crockery, it also fixes the items of crockery in the container for the purpose of an increased stability during transport. The heating aid is hereby also highly suitable as transport means into which a meal can be served in a central (large-scale) kitchen and subsequently transported to a remote user.

In order to enable joint transport of cutlery and cold meals, the heating aid has a cold zone in the form of a bottom part 19, which is left completely free by bottom space 16 and is thus free of the medium. An intermediate wall 23 between this bottom part 19 and the bottom space moreover takes a double-walled form and is filled with an insulating form. During the heating process this part will hereby not be heated, or hardly so, and will thus remain relatively cold.

Although the invention has been further elucidated with reference to only three exemplary embodiments, it will be apparent that the invention is by no means limited thereto. On the contrary, many other variations and embodiments are possible within the scope of the invention. In addition to being substantially rectangular, the container can for instance also be dish-like or of other form. In a further development of the device according to the invention an electronically readable memory element can be incorporated therein, from which a specific cooking program can be read by the induction apparatus, on the basis of which the cooking device is controlled. The regeneration process can thus be completed fully automatically and without any danger of mistakes by the user.

The materials used are only given by way of example, and other materials, and in particular other plastics, can be applied instead for the wall parts of the container. For containers which must be suitable for repeated use, use is preferably made here of relatively durable plastics which readily allow of injection-moulding or other industrial processing. In addition, the container can also be embodied as a disposable article, wherein use is made of once-only usable, relatively inexpensive raw materials.

For the medium use is made in the embodiments of a semi-fluid medium such as a paste or a gel, although a wholly fluid medium such as a liquid or grains, or even a solid medium can also be applied within the scope of the invention, provided the medium is capable of heat-exchanging contact between the capturing element and the inner cover and provided it can withstand the temperature increase caused by the capturing element. Use can also be made, instead of one or only a few capturing elements as in the given embodiments, of a plurality of distributed capturing elements, for instance in the form of metal particles or chippings which are incorporated more or less homogeneously in the medium.

## Claims

1. Heating aid for meals, comprising a box-like container with a base which is provided with at least one inductive capturing element which is susceptible to entering into inductive contact with an induction field of an induction apparatus, **characterized in that** the container comprises at least one closed bottom space between an inner cover and the base, which bottom space is at least almost completely filled with a medium, that the at least one capturing element is accommodated in the bottom space and is at least substantially wholly surrounded by the medium, and that the medium is suitable and able to enter into heat-exchanging contact between the capturing element and the inner cover.

2. Heating aid as claimed in claim 1, **characterized in that** the medium comprises a fluid, in particular a semi-fluid medium such as a paste or a gel.

3. Heating aid as claimed in claim 2, **characterized in that** the semi-fluid medium comprises a gel.

4. Heating aid as claimed in one or more of the foregoing claims, **characterized in that** the capturing element comprises a metal plate which is arranged parallel to the base at a certain height in the bottom space.

5. Heating aid as claimed in claim 4, **characterized in that** the metal plate comprises a ferromagnetic metal.

6. Heating aid as claimed in one or more of the foregoing claims, **characterized in that** one or more of a form, position, material, number and dimensions of the at least one capturing element is adapted to a maximum induction power that can be captured thereby at a determined power output of the induction apparatus.

7. Heating aid as claimed in one or more of the foregoing claims, **characterized in that** the inner cover comprises a pre-formed plate with at least one recess for receiving therein an item of crockery with a meal in at least practically fitting manner.

8. Heating aid as claimed in claims 6 and 7, **characterized in that** the inner cover comprises separate recesses for receiving therein separate items of crockery with a meal, and that there is provided per recess at least one capturing element, of which a form, position, material, number and dimensions are adapted to a maximum induction power that can be captured thereby at a determined power output of the induction apparatus subject to the item of crockery and meal in the associated recess.

9. Heating aid as claimed in one or more of the foregoing claims, **characterized in that** the bottom space is provided with a pressure-relief valve.

10. Heating aid as claimed in one or more of the foregoing claims, **characterized in that** the medium comprises a fluid, in particular a semi-fluid medium such as a paste or a gel, and that the inner cover comprises a flexible layer.

11. Heating aid as claimed in one or more of the foregoing claims, **characterized in that** the bottom space leaves a bottom part free.

12. Heating aid as claimed in one or more of the foregoing claims, **characterized in that** a thermally insulating layer is arranged between the capturing element and an outer casing of the container.

13. Heating aid as claimed in one or more of the foregoing claims, **characterized in that** at least an outer casing and the inner cover of the container are manufactured at least substantially wholly from plastic.

14. Heating aid as claimed in one or more of the foregoing claims, **characterized in that** an upright wall extends from the base and that the container is provided with a lid which lies all around against an upper edge of the wall.

15. Heating aid as claimed in claim 14, **characterized in that** the lid is manufactured at least substantially wholly from a plastic.

16. Heating aid as claimed in claim 14 or 15, **characterized in that** the lid is double-walled and filled with an insulating foam.
